# EUROPEAN PATENT SPECIFICATION

(11) **EP 3 437 934 B1**
(45) Date of publication and mention of the grant of the patent: **02.12.2020**
(21) Application number: 17773787.1
(22) Date of filing: 16.02.2017
(51) Int. Cl.: B60R 16/02, B60K 35/00, B60L 3/00, B60L 7/14, H02J 7/00, B60K 37/02

(54) **REGENERATED ENERGY DISPLAY DEVICE**
VORRICHTUNG ZUR ANZEIGE VON REGENERIERTER ENERGIE
DISPOSITIF D'AFFICHAGE D'ÉNERGIE RÉGÉNÉRÉE

(30) Priority: 28.03.2016 JP 2016064080
(43) Date of publication of application: 06.02.2019
(73) Proprietor: Mitsubishi Jidosha Kogyo Kabushiki Kaisha, Tokyo 108-8410 (JP)
(72) Inventor: TOKAIRIN Risa, Tokyo 108-8410 (JP); KOBAYASHI Yoichi, Tokyo 108-8410 (JP)
(74) Representative: Vossius & Partner Patentanwälte Rechtsanwälte mbB
(86) International application number: PCT/JP2017/005628
(87) International publication number: WO 2017/169239

(56) References cited:
- WO-A1-2011/021294
- DE-A1-102011 116 305
- JP-A- H0 511 719
- JP-A- H05 157 578
- JP-A- H10 300 524
- JP-A- 2007 237 970
- JP-A- 2007 314 100
- JP-A- 2014 051 230
- JP-A- 2014 051 230
- JP-A- 2014 217 108
- US-A1- 2011 023 772

## Description

### Technical Field

The present invention relates to a regenerated energy display device that is installed in a vehicle.

### Background Art

In some vehicles including a motor such as a motor as a drive source for running, energy at the time of deceleration is collected and stored as electric energy, i.e., regenerated energy, to charge a power storage unit such as a battery. Some of these vehicles that can perform regeneration include a configuration by which an occupant such as a driver is visually informed of a momentary amount of the regenerated energy that is generated by the motor during regeneration, and such a vehicle is disclosed in PTL 1, for example.

### Citation List

### Patent Literature

PTL 1: Japanese Unexamined Patent Application Publication No. 2014-51230
PTL 2: DE 10 2011 116305 A1 relates to a motor vehicle with an internal combustion engine and an extended fuel consumption display, and a method for determining and displaying the consumption information of the motor vehicle.

### Summary of Invention

### Technical Problem

In PTL 1, although the momentary amount of the regenerated energy is displayed on a display unit, the display format is merely a bar graph, which does not maintain or display the maximum value of the momentary amount of the regenerated energy. Thus, an improvement in terms of usability is desired.

An object of the present invention is to improve usability by making it possible to maintain a state in which the maximum value of the momentary amount of the regenerated energy is displayed.

### Solution to Problem

A regenerated energy display device according to claim 1 is installed in a vehicle capable of collecting regenerated energy in a power storage device and includes a display unit that is capable of displaying a momentary amount of the regenerated energy; and a control unit that controls the display unit such that it is possible to maintain a state in which a maximum value of the momentary amount of the regenerated energy is displayed.

### Advantageous Effects of Invention

According to the present invention, by making it possible to maintain a state in which the maximum value of the momentary amount of the regenerated energy that is obtained by regeneration is displayed, the history of the maximum value of the momentary amount of the regenerated energy is visualized. Accordingly, a driver can be motivated to care about regeneration while driving, which can improve usability.

### Brief Description of Drawings

[Fig. 1] Fig. 1 is a schematic configuration diagram of a vehicle in which a regenerated energy display device according to the present invention is installed.
[Fig. 2] Fig. 2 illustrates a configuration of a display unit included in the regenerated energy display device according to the present invention and an example of displayed details.
[Fig. 3] Fig. 3 is a block unit illustrating a configuration of an embodiment of the regenerated energy display device according to the present invention.
[Fig. 4] Fig. 4 illustrates an example of a screen at the time of changing a gauge of an integrated amount of regenerated energy.
[Fig. 5] Fig. 5 illustrates another example of the screen at the time of changing the gauge of the integrated amount of regenerated energy.
[Fig. 6] Fig. 6 illustrates still another example of the screen at the time of changing the gauge of the integrated amount of regenerated energy.
[Fig. 7] Fig. 7 illustrates an example of the screen in a peak-hold control mode that is a display control mode for a maximum value of a momentary amount of regenerated energy.
[Fig. 8] Fig. 8 illustrates another example of the screen in the peak-hold control mode that is the display control mode for the maximum value of the momentary amount of regenerated energy.
[Fig. 9] Fig. 9 illustrates still another example of the screen in the peak-hold control mode that is the display control mode for the maximum value of the momentary amount of regenerated energy.
[Fig. 10] Fig. 10 is a flowchart illustrating details of the peak-hold control mode that is the display control mode for the maximum value of the momentary amount of regenerated energy.
[Fig. 11] Fig. 11 illustrates an example of the screen in a reset-timing selection mode that is a display control mode for the maximum value of the momentary amount of regenerated energy.
[Fig. 12] Fig. 12 illustrates another example of the screen in the reset-timing selection mode that is the display control mode for the maximum value of the momentary amount of regenerated energy.
[Fig. 13] Fig. 13 illustrates still another example of the screen in the reset-timing selection mode that is the display control mode for the maximum value of the momentary amount of regenerated energy.
[Fig. 14] Fig. 14 is a flowchart illustrating details of the reset-timing selection mode that is the display control mode for the maximum value of the momentary amount of regenerated energy.

### Description of Embodiments

Now, an embodiment of the present invention will be described with reference to the drawings. In the embodiment, identical members or members having identical functions are denoted by identical reference numerals, and a repeated description thereof will be omitted as appropriate. Note that parts of components may be omitted, or cross-sections or schematic diagrams thereof may be illustrated, for easy understanding of the drawings.

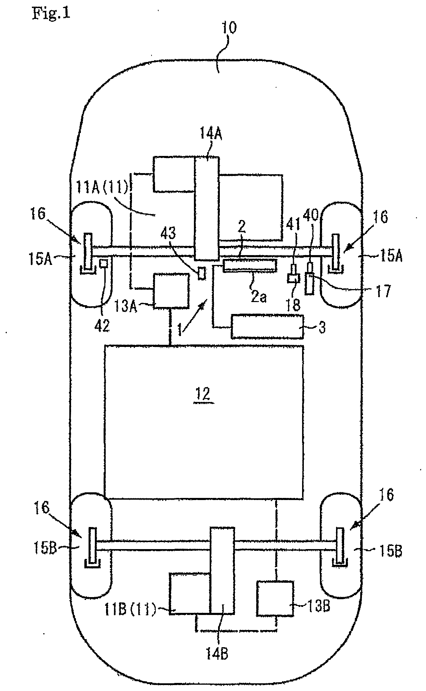

Fig. 1 is a schematic diagram illustrating the entire configuration of an electric vehicle 10 in which a regenerated energy display device 1 according to the embodiment is installed. In the vehicle 10, as drive sources for running, a front motor 11A and a rear motor 11B, which are motors, are disposed on the front side and the rear side, respectively. In the vehicle 10, a high-voltage battery 12 that is used for driving the front motor 11A and the rear motor 11B is installed.

The battery 12 is a power source unit and power storage unit and is charged with direct-current power in advance. The battery 12 can be charged by a power source device outside the vehicle or can be charged with electric energy that is generated during regeneration. The power that is discharged from the battery 12 is converted into alternate current by a front inverter 13A and a rear inverter 13B. Then, the alternate-current power from the front inverter 13A is supplied to the front motor 11A to rotationally drive the front motor 11A, and the alternate-current power from the rear inverter 13B is supplied to the rear motor 11B to rotationally drive the rear motor 11B.

The power that is output from the front motor 11A is transmitted to each of left and right front drive wheels 15A through a front transaxle 14A. The power that is output from the rear motor 11B is transmitted to each of left and right rear drive wheels 15B through a rear transaxle 14B.

The front motor 11A and the rear motor 11B are collectively referred to as "motors 11". The front inverter 13A and the rear inverter 13B are collectively referred to as "inverters 13". The front drive wheels 15A and the rear drive wheels 15B are collectively referred to as "drive wheels 15".

The vehicle 10 includes hydraulic braking devices 16 as a braking unit that supplies a braking force to the drive wheels 15. At the foot of the driver's seat of the vehicle 10, there are provided an accelerator pedal 17 that controls the vehicle velocity by controlling the output of the motors 15 and a brake pedal 18 that activates the braking devices 16. Reference numeral 40 denotes an acceleration sensor that detects ON/OFF of the accelerator pedal 17, and reference numeral 41 denotes a brake sensor that detects the depression of the brake pedal 18. Reference numeral 42 denotes a velocity sensor that detects the vehicle velocity, and reference numeral 43 denotes an ignition switch that sets a state in which the motors 11 can be activated.

The motors 11 are regeneratively driven at the time of a deceleration operation of the vehicle 10 to serve as a power generator. The time of a deceleration operation is the time of running in an accelerator-off state by releasing the depression state of the accelerator pedal 17 or the time of braking when the brake pedal 18 is depressed. The kinetic energy that is the resistance on the drive wheels 15 side during regeneration generates power as alternate-current power by regenerative driving of the drive motors 11 and is converted into direct current by the inverters 13. Then, the direct-current power is transmitted to the battery 12 and charges the battery 12 to be stored therein. In the vehicle 10 having such a regenerating function, by collecting the kinetic energy in the form of electric energy in the battery 12 through the regenerative driving of the motors 11, the energy is effectively used. In the embodiment, the amount of regenerated energy, i.e., the amount of electric energy, which is generated by the motors 11, is referred to as a regenerated amount Ra.

The regenerated energy display device 1 includes a display unit 2 that is capable of displaying various information items and a control unit 3 that controls details to be displayed on the display unit 2. The display unit 2 and the control unit 3 are configured independently of each other, and are connected so as to enable mutual communication via a signal line. The display unit 2 is disposed at, for example, the center of the dashboard of the vehicle 10, and the control unit 3 is disposed in the dashboard or the glovebox, in a space under the seat, or the like. Although the display unit 2 and the control unit 3 are configured independently of each other in the embodiment, the display unit 2 and the control unit 3 may be integrally configured.

Various information items that can be displayed include at least information regarding the regenerated energy, i.e., electric energy, which is generated at the time of regenerative driving of the motors 11, and the display unit 2 displays the information regarding the regenerated energy on a screen 2a. The control unit 3 controls the details displayed on the display unit 2 in accordance with a selected mode, which will be described later.

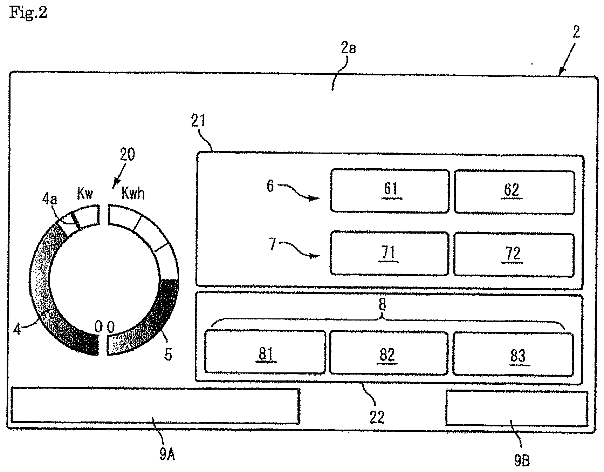

The regenerated energy display device 1 makes it possible to maintain a state in which, when displaying the information regarding the regenerated energy, together with a momentary amount Ma of the regenerated energy, i.e., electric energy, which is generated by the motors 11 during regeneration, a maximum value Ma1 of the momentary amount Ma is displayed on the screen 2a of the display unit 2 as a peak hold 4a as illustrated in Fig. 2. In the embodiment, the peak hold 4a is information that shows the maximum value Ma1 of the momentary amount Ma. In addition, in the embodiment, information that shows the regenerated amount Ra of the regenerated energy is also displayed on the screen 2a of the display unit 2.

By making it possible to maintain a state in which the maximum value Ma1 of the momentary amount Ma of the regenerated energy is displayed as the peak hold 4a on the screen 2a of the display unit 2 in the above manner, the transition and history of the momentary amount Ma and the maximum value Ma1 can be visualized. This can provide motivation for a driver when the driver releases the accelerator pedal 17 or depresses the brake pedal 18 as a deceleration operation. The motivation herein means what kind of deceleration operation generates what degree of regenerated energy, i.e., electric energy, to be stored in the battery 12 in Fig. 1. That is, as illustrated in Fig. 2, since the peak hold 4a is displayed on the screen 2a of the display unit 2, the driver can view the information regarding the momentary amount Ma and the maximum value Ma1 of the regenerated energy, thereby being promoted to care about regeneration while driving, which can improve usability.

Next, the configuration of the regenerated energy display device 1 will be described in more detail.

The display unit 2 is configured from, for example, a well-known touch panel having an information displaying function and a contact detecting function for detecting a contact of an occupant's finger, an instrument, or the like on the screen 2a. The screen 2a of the display unit 2 includes display areas 20, 21, and 22. In the display area 20, an integrated amount Aa of the regenerated amount Ra and the momentary amount Ma of the regenerated energy that is generated during regeneration are respectively displayed as a graph 4 and a graph 5 each shaped in a semi-circular arc. In the display area 21, a peak-hold selecting unit 6 and a reset-timing selecting unit 7 are displayed. In the display area 22, a display-gauge selecting unit 8 is displayed. In the embodiment, the display area 21 and the display area 22 form an operating unit. In the display area 20, the peak hold 4a, which is information that shows the maximum value Ma1 of the momentary amount Ma is displayed on the graph 4 in an emphasized manner. The graph 4 is displayed as information that shows the momentary amount Ma, and the graph 5 is displayed as information that shows the integrated amount Aa, each in the display area 20 of the display unit 2.

The peak-hold selecting unit 6 is operated by an occupant when selecting whether the peak hold 4a is to be displayed on the screen 2a of the display unit 2. The peak-hold selecting unit 6 includes an off-switch 61 as selection means that is selected when the peak hold 4a is not to be displayed and an on-switch 62 that is selected when the peak hold 4a is to be displayed. The control unit 3 is set to a peak-hold control mode for controlling the display/non-display of the peak hold 4a in accordance with an operation of the off-switch 61 or the on-switch 62. The peak-hold control mode is a routine that is executed by the control unit 3.

The reset-timing selecting unit 7 is operated by an occupant when selecting a timing for resetting, i.e., setting to zero, the graph 4 and the peak hold 4a that show the momentary amount Ma and the maximum value Ma1 of the regenerated energy as desired. The reset-timing selecting unit 7 includes a selection switch 71 and a selection switch 72. The selection switch 71 is operated when resetting the peak hold 4a every time the ignition switch 43, as a start operating unit that is operated when the vehicle 10 is started, is turned on and off, i.e., in each start of the vehicle 10. The selection switch 72 is selected when resetting the peak hold 4a at every ON/OFF of the accelerator pedal 17, i.e., at each time of regeneration.

The display-gauge selecting unit 8 is operated by an occupant when changing a gauge that is a displayed level of the integrated amount Aa of the regenerated energy. The changing of the gauge herein means to change the upper limit of the integrated amount Aa to be displayed. The display-gauge selecting unit 8 includes a plurality of selection switches 81, 82, and 83 for selecting the gauge of the integrated amount Aa to be displayed. Although the three selection switches 81, 82, and 83 are provided so that any of the three gauges can be displayed in the embodiment, a plurality of gauges can be selected and changed by using a single selection switch by different operation methods.

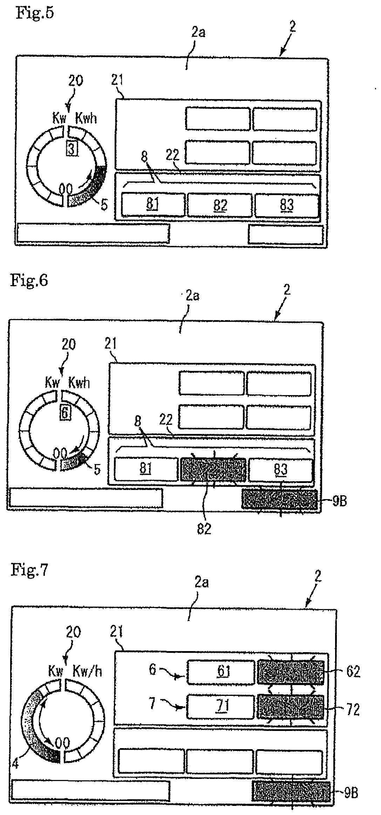

In response to an operation of any of the selection switches 81 to 83, the graph 5 in which the gauge is changed to the gauge corresponding to the operated selection switch is displayed on the screen 2a. For example, the gauge of the graph 5 in the display area 20 is changed as follows. An operation of the selection switch 81 changes the upper limit of the displayed unit into 3 kWh as illustrated in Fig. 5, an operation of the selection switch 82 changes the upper limit into 6 kWh as illustrated in Fig. 6, and an operation of the selection switch 83 changes the upper limit into 12 kWh. That is, the control unit 3 has a function of changing the display gauge of the integrated amount Aa in accordance with the gauge selected in the display-gauge selecting unit 8 and displaying the changed gauge on the display unit 2.

The control unit 3 is set in advance to a reset-timing selection mode that is started in response to an operation of the reset-timing selecting unit 7. The reset-timing selection mode is a routine that is executed by the control unit 3 to enable resetting of the peak hold 4a displayed on the display unit 2.

On the display unit 2, a guidance switch 9A that is selected when displaying guidance details regarding the regenerated energy on the screen 2a is displayed. When the guidance switch 9A is selected by, for example, a driver, the control unit 3 changes the displayed details to display the guidance details in the form of text or image on the screen 2a of the display unit 2.

On the screen 2a of the display unit 2, a confirmation switch 9B is displayed. The confirmation switch 9B is operated by a driver when confirming each of the operation details of the peak-hold selecting unit 6, the reset-timing selecting unit 7, the display-gauge selecting unit 8, and the guidance switch 9A.

The peak-hold selecting unit 6, the reset-timing selecting unit 7, the display-gauge selecting unit 8, the guidance switch 9A, and the confirmation switch 9B are displayed as icons on the screen 2a and are configured to output an electric signal corresponding to a switch in response to the icon of the switch being pressed, i.e., tapped, by a fingertip or an instrument.

The control unit 3 is configured from a computer including a CPU, which is a computation unit, and RAM, ROM, and the like, which are memory. The control unit 3 may be a control unit that controls the entire vehicle 10 or may be a control unit that is dedicated to control of the display unit 2.

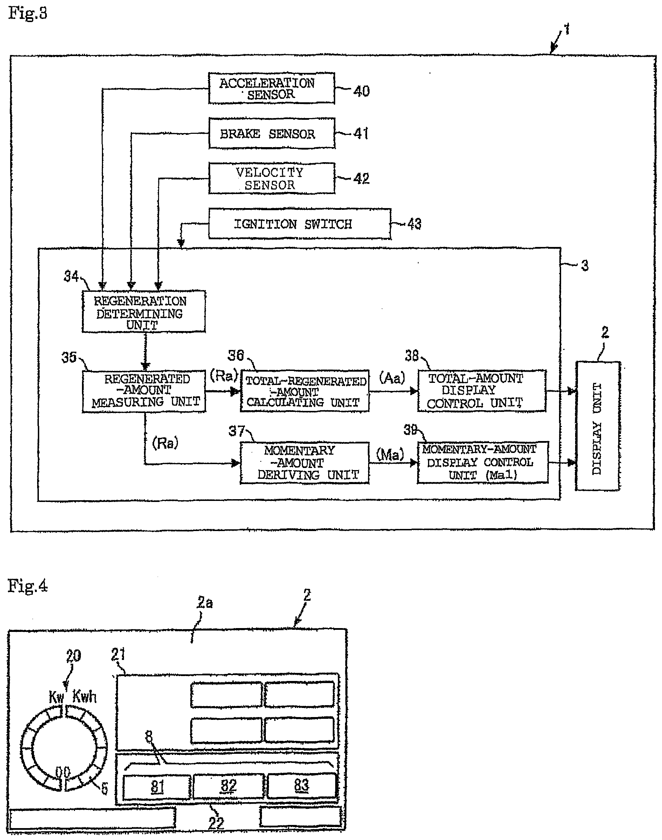

As illustrated in Fig. 3, the control unit 3 includes a regeneration determining unit 34 that determines whether regeneration is being performed and a regenerated-amount measuring unit 35 that measures the regenerated amount Ra, which is the amount of regenerated energy that is generated by regenerative driving of the motors 11. The control unit 3 includes a total-regenerated-amount calculating unit 36 that calculates the integrated amount Aa of the regenerated amount Ra measured by the regenerated-amount measuring unit 35 and a momentary-amount deriving unit 37 that derives the momentary amount Ma of the regenerated amount Ra measured by the regenerated-amount measuring unit 35. The control unit 3 includes a total-amount display control unit 38 that controls the information of the integrated amount Aa to be displayed on the display unit 2 and a momentary-amount display control unit 39 that controls the information of the momentary amount Ma or the upper limit of the momentary amount Ma to be displayed on the display unit 2. The control unit 3 is configured such that the regenerated amount Ra measured by the regenerated-amount measuring unit 35 and the momentary amount Ma derived by the momentary-amount deriving unit 37 are stored in the RAM. The RAM stores operation statuses of the off-switch 61 and the on-switch 62.

If a deceleration operation such as a brake operation or an accelerator-off state is performed while the vehicle 10 is running, the regeneration determining unit 34 determines that regeneration is being performed. Whether the vehicle 10 is running may be determined on the basis of the presence or absence of velocity information from the velocity sensor 42. Whether a deceleration operation is being performed can be determined on the basis of an ON/OFF signal of the accelerator pedal 17 detected by the acceleration sensor 40 or the presence or absence of a depression detection signal of the brake pedal 18 detected by the brake sensor 41.

In the embodiment, the acceleration sensor 40, the brake sensor 41, and the ignition switch 43 are connected to the control unit 3 via a signal line and output ON/OFF information of these to the control unit 3. The velocity sensor 42 is connected to the control unit 3 via a signal line and outputs the velocity information to the control unit 3.

The regenerated-amount measuring unit 35 is configured from a voltage measurement device that detects a voltage to be converted into direct current by the inverters 13 to be transmitted to the battery 12.

The total-amount display control unit 38 controls the display unit 2 such that the area of the graph 5 in the circular arc shape that is displayed on the display unit 2 is increased or decreased in the vertical direction in accordance with an increase or a decrease in the integrated amount Aa that is displayed by using Kwh. In addition, upon an operation of any of the selection switches 81 to 83, the total-amount display control unit 38 controls the display unit 2 to change the upper limit of the display gauge in accordance with the operated selection switch for display.

The momentary-amount display control unit 39 converts the momentary amount Ma into Kw, controls the display unit 2 such that the circular arc area of the graph 4 displayed on the display unit 2 to vary in the vertical direction in accordance with the value of the momentary amount Ma, and controls the display unit 2 to display the maximum value Ma1 of the momentary amount Ma as the peak hold 4a.

Figs. 4 to 6 illustrate changes in the screen when the gauge of the integrated value of the regenerated energy is changed by operating the display-gauge selecting unit 8. Fig. 4 illustrates the initial state. In the embodiment, the gauge of 3 kWh displayed when the selection switch 81 is operated is set as the initial state.

In response to a deceleration operation such as a braking operation or an accelerator-off state while the vehicle 10 is running, the control unit 3 determines that regeneration is being performed. During regeneration, the motors 11 are regeneratively driven, and regenerated energy (electric energy) is generated to charge the battery 12. In the control unit 3, the regenerated-amount measuring unit 35 measures the regenerated amount Ra, the total-regenerated-amount calculating unit 36 adds the regenerated amount Ra measured by the regenerated-amount measuring unit 35 to calculate the integrated amount Aa. The total-amount display control unit 38 controls the display unit 2 such that the information of the integrated amount Aa is displayed in the display area 20 of the screen 2a of the display unit 2 as the graph 5. As the value of the integrated amount Aa is increased, as illustrated in Fig. 5, the display of the graph 5 is increased upward.

As illustrated in Fig. 6, when the selection switch 82 of the display-gauge selecting unit 8 is operated and further the confirmation switch 9B is operated, the total-amount display control unit 38 changes the display gauge of the integrated amount Aa. In this example, the gauge of the upper limit is changed from 3 kWh to 6 kWh, and thus, the gauge is twice as long. Accordingly, the display unit 2 is controlled by the total-amount display control unit 38 such that the area of the graph 5 displayed in the display area 20 of the display unit 2 becomes a half of the case in which the gauge is 3 kWh and the information that shows the gauge is changed to the selected gauge. Accordingly, the area of the graph 5 displayed in the display area 20 of the display unit 2 is smaller than that of 3 kWh, that is, the graph 5 is displayed to be lower. In addition, "3", which is the information that shows the gauge, is changed to "6" for display.

In a case in which the display gauge of the integrated amount Aa of the regenerated energy displayed on the screen 2a of the display unit 2 is changeable in the above manner, a driver can select any display format of the integrated amount Aa as desired, which can improve usability.

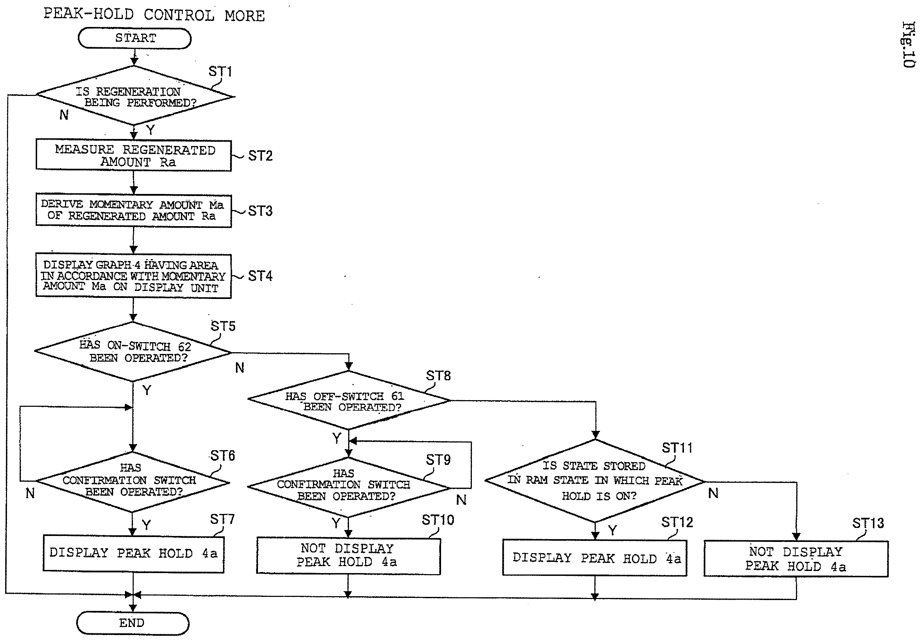

Next, the peak-hold control mode will be described with reference to Figs. 7 to 9 and Fig. 10. Figs. 7 to 9 illustrate changes in the screen when displaying the momentary amount Ma of the regenerated energy and the information of the maximum value Ma1 thereof by operating the peak-hold selecting unit 6. Fig. 10 is a flowchart illustrating the details of the peak-hold control mode.

In step ST1 in Fig. 10, the control unit 3 determines whether regeneration is being performed. If a deceleration operation such as a brake operation or an accelerator-off state is performed while the vehicle 10 is running, the control unit 3 determines that regeneration is being performed during which the motors 11 are regeneratively driven, and the process proceeds to step ST2. When the motors 11 are regeneratively driven, regenerated energy, i.e., electric energy, is generated to charge the battery 12.

In step ST2, the control unit 3 measures the regenerated amount Ra by using the regenerated-amount measuring unit 35. In step ST3, the momentary amount Ma of the regenerated amount Ra measured by the regenerated-amount measuring unit 35 is derived by the momentary-amount deriving unit 37, and the process proceeds to step ST4.

In step ST4, in the control unit 3, the momentary-amount display control unit 39 converts the momentary amount Ma into Kw and controls the display unit 2 such that the circular arc area of the graph 4 displayed on the display unit 2 varies in the vertical direction in accordance with the value of the momentary amount Ma, and the process proceeds to step ST5. As a result, on the screen 2a of the display unit 2, as illustrated in Fig. 7, the graph 4 in the circular arc shape showing the momentary amount Ma is displayed by changing the circular arc area in accordance with the momentary amount Ma.

In step ST5, on the basis of the presence or absence of a signal from the on-switch 62, the control unit 3 determines whether the on-switch 62 has been operated. If the on-switch 62 has been operated, the process proceeds to step ST6, and on the basis of the presence or absence of a signal from the confirmation switch 9B, the control unit 3 determines whether the confirmation switch 9B has been operated. Until the confirmation switch 9B is operated, the control unit 3 is kept in a waiting state. Upon detection of a signal of an operation of the confirmation switch 9B, the process proceeds to step ST7.

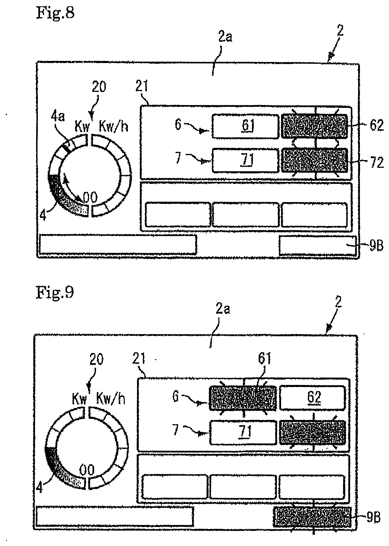

In step ST7, the control unit 3 controls the display unit 2 to display the maximum value Ma1 of the momentary amount Ma as the peak hold 4a, and then the process ends. As a result, on the screen 2a of the display unit 2, as illustrated in Fig. 8, the graph 4 in the circular arc shape showing the momentary amount Ma is displayed by changing the circular arc area in accordance with the momentary amount Ma. In addition, a state in which the peak hold 4a that shows the maximum value Ma1 of the momentary amount Ma is displayed on the graph 4 in the circular arc shape is maintained.

If the on-switch 62 has not been operated in step ST5, the process proceeds to step ST8, and on the basis of the presence or absence of a signal from the off-switch 61, the control unit 3 determines whether the off-switch 61 has been operated. If the off-switch 61 has been operated, the process proceeds to step ST9, and on the basis of the presence or absence of a signal from the confirmation switch 9B, the control unit 3 determines whether the confirmation switch 9B has been operated. Until the confirmation switch 9B is operated, the control unit 3 is kept in a waiting state. Upon detection of a signal of an operation of the confirmation switch 9B, the process proceeds to step ST10.

In step ST10, the control unit 3 controls the display unit 2 such that the maximum value Ma1 of the momentary amount Ma is not displayed as the peak hold 4a, and then the process ends. As a result, on the screen 2a of the display unit 2, as illustrated in Fig. 9, the graph 4 in the circular arc shape showing the momentary amount Ma is displayed by changing the circular arc area in accordance with the momentary amount Ma, but the peak hold 4a is no longer displayed.

If the on-switch 62 has not been operated in step ST5 and the off-switch 61 has not been operated in step ST8, the control unit 3 proceeds to step ST11. In step ST11, on the basis of the history of an operation of the on-switch 62, the control unit 3 determines whether the state stored in the RAM is a state in which the peak hold 4a is ON. If an activation signal of the on-switch 62, specifically on-state, is stored in the RAM, the process proceeds to step ST12, and the control unit 3 controls the display unit 2 to display the maximum value Ma1 of the momentary amount Ma as the peak hold 4a, and then the process ends. On the other hand, if the state in which the off-switch 61 has been operated is stored in the RAM, the control unit 3 does not display the peak hold 4a, and the process ends.

If the peak-hold control mode is executed in the above manner, it is possible to maintain a state in which the momentary amount Ma that changes in accordance with variations of the regenerated energy that is generated by regeneration, and the peak hold 4a that shows the maximum value Ma1 are displayed on the screen 2a. As a result, the history of the maximum value Ma1 of the momentary amount Ma of the regenerated energy can be visualized. Accordingly, a driver can be motivated to care about regeneration while driving, which can improve usability.

In addition, for an occupant who thinks the display of the peak hold 4a is intrusive, by operating the off-switch 61, the peak hold 4a is no longer displayed on the screen 2a. This can reduce the intrusive feeling due to the display of the peak hold 4a, which can also improve usability.

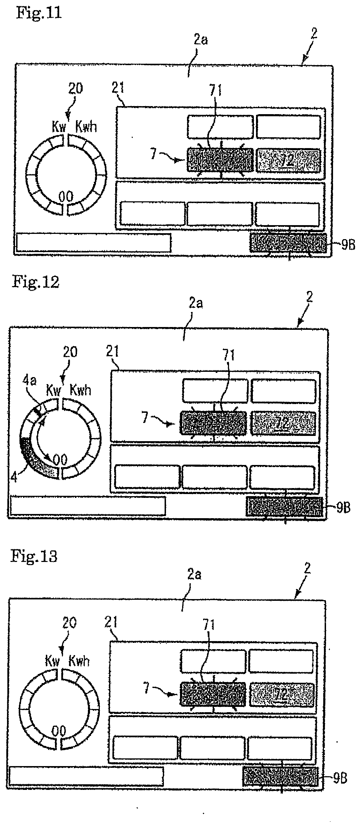

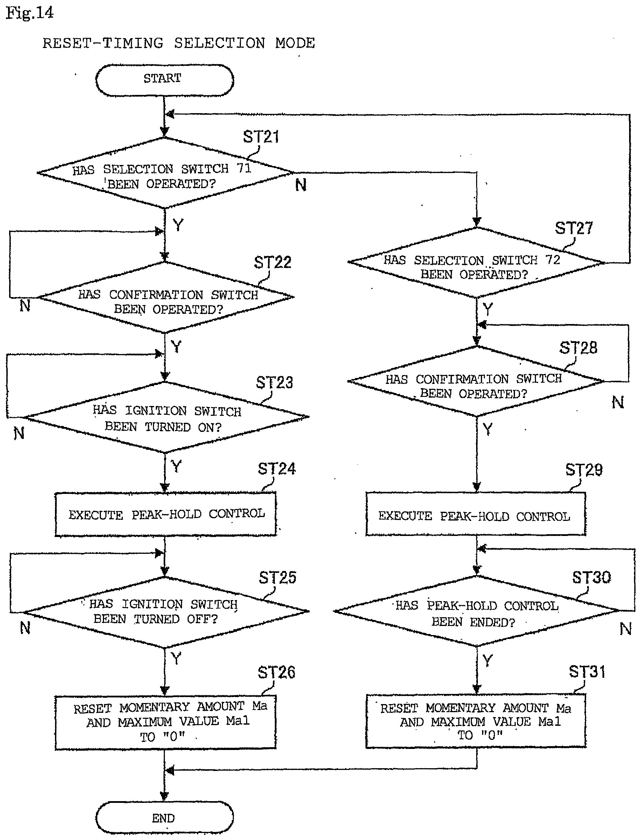

Next, the reset-timing selection mode will be described with reference to Figs. 11 to 13 and Fig. 14. Figs. 11 to 13 illustrate changes in the screen at the time of the reset-timing selection mode, and Fig. 14 is a flowchart illustrating the details of the reset-timing selection mode. Fig. 11 illustrates the screen at the time of the setting of the reset-timing selection mode, Fig. 12 illustrates an example of the screen at the time of the peak-hold control mode, and Fig. 13 illustrates the screen at the time of reset.

In step ST21 in Fig. 14, on the basis of the presence or absence of a signal from the selection switch 71, the control unit 3 determines whether the selection switch 71 has been operated. If a signal of an operation of the selection switch 71 is detected, the process proceeds to step ST22, and on the basis of the presence or absence of a signal from the confirmation switch 9B, the control unit 3 determines whether the confirmation switch 9B has been operated. At this time, until the confirmation switch 9B is operated, the control unit 3 is kept in a waiting state, and upon detection of a signal of an operation of the confirmation switch 9B, the process proceeds to step ST23.

In step ST23, on the basis of the presence or absence of an on-signal of the ignition switch 43, the control unit 3 determines whether the ignition switch 43 has been turned on. If the ignition switch 43 has been turned on, the process proceeds to step ST24, and the control unit 3 executes the peak-hold control that has been described above with reference to Fig. 10, and then the process proceeds to step ST25. Fig. 12 illustrates an example of the screen at the time of execution of the peak-hold control.

In step ST25, after the execution of the peak-hold control, on the basis of the presence or absence of an off-signal of the ignition switch 43, the control unit 3 determines whether the ignition switch 43 has been turned off. In this example, it is determined whether a driver has parked the vehicle. If the ignition switch 43 has been turned off, in step ST26, the control unit 3 resets the graph 4 and the peak hold 4a corresponding to the momentary amount Ma and the maximum value Ma1 displayed on the screen 2a of the display unit 2, and controls the display unit 2 such that the graph 4 and the peak hold 4a are deleted from, i.e., not displayed on, the screen 2a of the display unit 2, as illustrated in Fig. 13.

If the selection switch 71 has not been operated in step ST21, in step ST27, on the basis of the presence or absence of a signal from the selection switch 72, the control unit 3 determines whether the other selection switch 72 has been operated. If a signal of an operation of the selection switch 72 has been detected, the process proceeds to step ST28, and on the basis of the presence or absence of a signal from the confirmation switch 9B, the control unit 3 determines whether the confirmation switch 9B has been operated. At this time, until the confirmation switch 9B is operated, the control unit 3 is kept in a waiting state, and upon detection of a signal of an operation of the confirmation switch 9B, the process proceeds to step ST29.

In step ST29, the control unit 3 executes the peak-hold control that has been described above with reference to Fig. 10, and the process proceeds to step T30 in which it is determined whether the peak-hold control has been ended. For example, it may be determined that the peak-hold control has been ended, on the basis of the presence or absence of an on-signal of the acceleration sensor 40 that is used for determining whether regeneration is being performed, or on the basis of the presence or absence of an off-signal that is transmitted from the brake sensor 41 if the depression of the brake pedal 18 has been released.

Upon the end of the peak-hold control, the process proceeds to step ST31, and the control unit 3 resets the graph 4 and the peak hold 4a corresponding to the momentary amount Ma and the maximum value Ma1 displayed on the screen 2a of the display unit 2, and controls the display unit 2 such that the graph 4 and the peak hold 4a are deleted from, i.e., not displayed on, the screen 2a of the display unit 2, as illustrated in Fig. 13.

That is, if the selection switch 71 has been operated, by resetting the display of the graph 4 and the peak hold 4a every time the vehicle 10 is started, a driver can be motivated to care about the regenerated energy during the latest regeneration while driving every time the vehicle 10 is started, which can improve usability.

If the selection switch 72 has been operated, by resetting the display of the graph 4 and the peak hold 4a at every time of regeneration after start, at the time of running, a driver can be motivated to care about the regenerated energy while driving, which can improve usability.

Note that, if none of the selection switches 71 and 72 have been operated, determination is made on the basis of a set value that is stored in the RAM of the control unit 3. Note that a default value is set in advance in the RAM at the time of initial activation.

The control unit 3 may control the display unit 2 such that the peak hold 4a that is displayed in the display area 20 of the display unit 2 at the time of the peak-hold control is displayed in a color different from the color of the graph 4 in the circular arc shape showing the momentary amount Ma of the regenerated energy or is displayed to be thicker than the scale of the graph 4 displayed in the display area 20. With this configuration, the visibility of the peak hold 4a can be increased, and a driver can be motivated to care about regeneration much more while driving, which can improve usability.

When the graph 4 and the peak hold 4a are displayed at each time of regeneration control after an operation of the selection switch 72 and start, while maintaining a state in which the information of the peak hold 4a of the last time is stored in a storage unit of the control unit 3 and the peak hold 4a of the last time is displayed on the screen 2a, the graph 4 that shows the momentary amount Ma of this time, i.e., the latest momentary amount Ma, and the peak hold 4a may be displayed in the display area 20 of the screen 2a of the display unit 2. That is, the control unit 3 controls the display unit 2 such that the peak hold 4a, which is information that shows the maximum value of the momentary amount of the last time, and information of the peak hold 4a of this time, which is information that shows the maximum value of the latest momentary amount, can be displayed simultaneously on the display unit 2.

By making it possible to display the peak hold 4a of the last time and the peak hold 4a of this time simultaneously on the display unit 2 in this manner, a driver can be more motivated to care about regeneration while driving, which can improve usability.

The electric vehicle 10 using the front motor 11A and the rear motor 11B as drive sources for running is illustrated as an example. However, a vehicle to which the present invention is applicable may be a hybrid vehicle including any one of the front motor 11A and the rear motor 11B and an internal combustion engine in combination as long as the regenerating function is included.

Although the battery 12 has been illustrated as an example of the power storage unit of the front motor 11A and the rear motor 11B in the embodiment, a capacitor, which is a well-known storage battery, may also be used as the power storage unit.

### Reference Signs List

- 10: vehicle
- 2: display unit
- 1: regenerated energy display device
- Ma: momentary amount
- Ma1: maximum value
- 4a: information of maximum value (peak hold)
- 61: selection means

## Claims

1. A regenerated energy display device (1) for a vehicle (10) capable of collecting regenerated energy, the regenerated energy display device comprising:
a display unit (2) that is capable of displaying a momentary power (Ma) of the regenerated energy; and
a control unit (3) that is configured to control the display unit such that it is possible to maintain a state in which information that shows a maximum value (Ma1) of the momentary power of the regenerated energy is displayed,
wherein the control unit has a peak-hold control mode for controlling the state in which the information that shows the maximum value of the momentary power is displayed and is configured to control the display unit such that the maximum value of the momentary power and the momentary power of the regenerated energy are capable of being displayed simultaneously.

2. The regenerated energy display device according to Claim 1, wherein the control unit is configured to control the display unit such that information that shows a maximum value of a momentary power of a last time and information that shows a maximum value of a latest momentary power are capable of being displayed simultaneously.

3. The regenerated energy display device according to any one of Claims 1 to 2, wherein the control unit has a reset-timing selection mode in which the information that shows the maximum value of the momentary power displayed on the display unit is capable of being reset.

4. The regenerated energy display device according to Claim 3, wherein, in the reset-timing selection mode, the information that shows the maximum value of the momentary power displayed on the display unit is reset every time the vehicle is started.

5. The regenerated energy display device according to Claim 3, wherein, in the reset-timing selection mode, the information that shows the maximum value of the momentary power displayed on the display unit is reset at each time of regeneration.

## Patentansprüche

1. Vorrichtung zur Anzeige regenerierter Energie (1) für ein Fahrzeug (10), das in der Lage ist, regenerierte Energie zu sammeln, wobei die Vorrichtung zur Anzeige regenerierter Energie aufweist:
eine Anzeigeeinheit (2), die in der Lage ist, eine momentane Leistung (Ma) der regenerierten Energie anzuzeigen; und
eine Steuerungseinheit (3), die eingerichtet ist, die Anzeigeeinheit derart anzusteuern, dass es möglich ist, einen Zustand beizubehalten, in dem Informationen angezeigt werden, die einen Maximalwert (Ma1) der momentanen Leistung der regenerierten Energie zeigen,
wobei die Steuerungseinheit einen Spitzenhaltesteuerungsmodus zur Steuerung des Zustands aufweist, in dem die Informationen angezeigt werden, die den Maximalwert der momentanen Leistung zeigen, und eingerichtet ist, die Anzeigeeinheit derart anzusteuern, dass der Maximalwert der momentanen Leistung und die momentane Leistung der regenerierten Energie gleichzeitig angezeigt werden können.

2. Vorrichtung zur Anzeige regenerierter Energie nach Anspruch 1, wobei die Steuerungseinheit eingerichtet ist, die Anzeigeeinheit derart anzusteuern, dass Informationen, die einen Maximalwert einer momentanen Leistung eines letzten Mals zeigen, und Informationen, die einen Maximalwert einer jüngsten momentanen Leistung zeigen, gleichzeitig angezeigt werden können.

3. Vorrichtung zur Anzeige regenerierter Energie nach einem der Ansprüche 1 bis 2, wobei die Steuerungseinheit einen Reset-Zeitpunkt-Auswahlmodus besitzt, in dem die Informationen, die den Maximalwert der momentanen Leistung zeigen, die an der Anzeigeeinheit angezeigt wird, zurückgesetzt werden können.

4. Vorrichtung zur Anzeige regenerierter Energie nach Anspruch 3, wobei in dem Reset-Zeitpunkt-Auswahlmodus die Informationen, die den Maximalwert der momentanen Leistung zeigen, die an der Anzeigeeinheit angezeigt wird, immer dann zurückgesetzt werden, wenn das Fahrzeug gestartet wird.

5. Vorrichtung zur Anzeige regenerierter Energie nach Anspruch 3, wobei in dem Reset-Zeitpunkt-Auswahlmodus die Informationen, die den Maximalwert der momentanen Leistung zeigen, die an der Anzeigeeinheit angezeigt wird, zu jedem Zeitpunkt einer Regeneration zurückgesetzt werden.

## Revendications

1. Dispositif d'affichage d'énergie régénérée (1) pour un véhicule (10) capable de collecter de l'énergie régénérée, le dispositif d'affichage d'énergie régénérée comprenant :
une unité d'affichage (2) qui est capable d'afficher une puissance momentanée (Ma) de l'énergie régénérée ; et
une unité de commande (3) qui est configurée pour commander l'unité d'affichage de sorte qu'il soit possible de maintenir un état dans lequel une information, qui montre une valeur maximale (Ma1) de la puissance momentanée de l'énergie régénérée, est affichée,
dans lequel l'unité de commande dispose d'un mode de commande de maintien de crête pour commander l'état dans lequel l'information, qui montre la valeur maximale de la puissance momentanée, est affichée, et est configurée pour commander l'unité d'affichage de sorte que la valeur maximale de la puissance momentanée et la valeur maximale de l'énergie régénérée puissent être affichées simultanément.

2. Dispositif d'affichage d'énergie régénérée selon la revendication 1, dans lequel l'unité de commande est configurée pour commander l'unité d'affichage de sorte que l'information qui montre une valeur maximale d'une puissance momentanée d'une dernière fois, et que l'information qui montre une valeur maximale de la dernière puissance momentanée puissent être affichées simultanément.

3. Dispositif d'affichage d'énergie régénérée selon l'une quelconque des revendications 1 et 2, dans lequel l'unité de commande dispose d'un mode de sélection de réinitialisation dans lequel l'information qui montre la valeur maximale de la puissance momentanée affichée sur l'unité d'affichage peut être réinitialisée.

4. Dispositif d'affichage d'énergie régénérée selon la revendication 3, dans lequel, en mode de sélection de réinitialisation, l'information qui montre la valeur maximale de la puissance momentanée affichée sur l'unité d'affichage est réinitialisée chaque fois que le véhicule démarre.

5. Dispositif d'affichage d'énergie régénérée selon la revendication 3, dans lequel, en mode de sélection de réinitialisation, l'information qui montre la valeur maximale de la puissance momentanée affichée sur l'unité d'affichage est réinitialisée à chaque régénération.
